(19) **Europäisches Patentamt**

**European Patent Office**

**Office européen des brevets**

(11) **EP 0 835 010 B1**

(12) **FASCICULE DE BREVET EUROPEEN**

(45) Date de publication et mention
de la délivrance du brevet:
**02.02.2005 Bulletin 2005/05**

(51) Int Cl.⁷: **H04L 12/56**

(21) Numéro de dépôt: **97402266.7**

(22) Date de dépôt: **29.09.1997**

(54) **Système de gestion de trafic et de contrôle d'encombrement pour réseaux à base de paquets**

System zur Verkehrssteuerung und Überlastregelung für Paketnetzwerke

Traffic management and congestion control system for packet based networks

(84) Etats contractants désignés:
**AT BE CH DE ES GB IT LI SE**

(30) Priorité: **01.10.1996 FR 9611940**

(43) Date de publication de la demande:
**08.04.1998 Bulletin 1998/15**

(73) Titulaire: **ALCATEL**
**75008 Paris (FR)**

(72) Inventeurs:
• **Luguern, Jean-Pierre**
**44360 St. Etienne de Montluc (FR)**

• **Accarion, Michel**
**44000 Nantes (FR)**

(74) Mandataire: Sciaux, Edmond et al
**COMPAGNIE FINANCIERE ALCATEL**
**Département Propriété Industrielle**
**54, rue La Boétie**
**75008 Paris (FR)**

(56) Documents cités:
**EP-A- 0 374 928          EP-A- 0 712 220**

**Description**

La présente invention concerne des réseaux à base de paquets, et plus précisément la gestion de trafic et le contrôle d'encombrement pour réseaux à base de paquets.

Un réseau de communication à base de paquets prévoit la transmission de paquets entre différents noeuds dans un réseau de communication. Un paquet comprend un groupement de bits d'une taille quelconque, fixe ou variable. Parmi les exemples de réseaux à base de paquets on recense notamment : les réseaux à relais de trame ('Frame Relay' en anglais) dans lesquels un paquet correspond à une trame de relais de trame ; un réseau de commutation de cellules, par exemple un réseau de mode de transfert asynchrone (ATM), dans lequel un paquet correspond à une cellule ATM ; etc. Un noeud peut être défini comme un point de terminaison pour deux ou plusieurs canaux ou lignes, et comporte généralement du matériel de contrôle.

Au sein d'un réseau de communication à base de paquets, une connexion virtuelle (VC) est établie entre un noeud source et un noeud destinataire et traverse généralement un ou plusieurs noeuds intermédiaires. Une connexion virtuelle est une connexion (canal) logique entre le noeud source et le noeud destinataire permettant la transmission de paquets entre ceux-ci. Chaque noeud dans la connexion virtuelle agit comme un échangeur de paquets pour recevoir et envoyer un paquet à son noeud destinataire. Chaque noeud au sein du réseau de communication peut faire partie d'une diversité de connexions virtuelles. Les noeuds terminaux, tel le noeud source et le noeud destinataire, possèdent des cartes d'interface nécessaires pour recevoir des paquets préformatés, et/ou pour formater correctement les données contenues dans un flux de données d'utilisateur classique, de façon à obtenir des paquets, et/ou pour ré assembler des paquets de façon à obtenir les flux de données d'utilisateur classiques.

Les réseaux de communication à base de paquets sont capables de combiner une diversité de données telles que des données de réseau local, des données vocales, et des données image/vidéo en des paquets en vue de leur transmission sur des jonctions numériques à haute vitesse. Chaque noeud source et chaque noeud destinataire est interconnecté à différents types de matériel local client (CPE) tel un réseau local, du matériel télécopieur/modem, du matériel vocal et du matériel image/vidéo et d'autres types de matériel de paquet et/ou de données en vue de la transmission des paquets correspondants par l'intermédiaire du réseau de communication vers un noeud destinataire.

Dans de tels réseaux à base de paquets, il est important de prévoir des protocoles adaptés à la gestion du trafic et au contrôle d'encombrement de paquets se déplaçant par l'intermédiaire d'une connexion virtuelle. Différents procédés ont été développés pour contrôler le débit de transmission de paquets sur une connexion virtuelle et également pour contrôler la suppression sélective de paquets en vue d'une gestion et d'un contrôle d'encombrement de paquets.

Une approche de la gestion et du contrôle d'encombrement de paquets consiste en une approche à base de crédits. L'approche à base de crédits est un protocole qui agit entre des noeuds adjacents, identifiés comme un émetteur et un récepteur, dans lequel un paquet n'est transmis entre un émetteur et un récepteur que si l'émetteur sait que le récepteur peut accepter les informations sans pertes. Le récepteur envoie des informations de contrôle à l'émetteur en indiquant s'il est capable d'accepter de nouveaux paquets. L'approche à base de crédits ne compte pas sur des signaux de bout en bout pour répondre à l'encombrement. Dans une telle approche à base de crédits, un contrôle en boucle fermée de l'émetteur est mis en oeuvre de sorte que les données sont envoyées le plus rapidement possible, sans perte de données, de l'émetteur au récepteur.

Une autre approche de gestion d'encombrement est une approche à retour d'informations dans laquelle l'état d'encombrement de la connexion virtuelle est mesuré au fur et à mesure que des paquets circulent dans un sens aller, du noeud source vers le noeud destinataire, et la mesure de l'état d'encombrement est renvoyée du noeud destinataire au noeud source pour ajuster l'introduction de paquets sur le réseau.

Cette approche est décrite dans la demande de brevet européen **EP-A-0 719 012** au nom du même déposant. Cependant, l'enseignement de cette demande n'entre pas dans le cadre du problème présenté par la présente invention.

Le document **EP-A-0 374 928** décrit un procédé de gestion de trafic pour une connexion virtuelle d'un réseau de communication à base de paquets, ledit procédé consistant à :

transmettre, à partir de matériels client sources, des paquets à destination de matériels client destinataires ;

- multiplexer temporellement les paquets provenant de matériels client sources différents ;
- stocker temporairement dons une file d'attente lesdits paquets multiplexés ;
- transmettre sur ladite connexion virtuelle lesdits paquets stockés ;
- déterminer une information de congestion sur ladite connexion virtuelle en direction desdits matériels client destinataires ;
- transmettre ladite information de congestion à des moyens de gestion de débit et contrôler, par ces moyens de gestion de débit, le débit des informations introduites en amont dudit multiplexage pour prévenir le débordement de ladite file d'attente.

Plus précisément, ladite information de congestion a une valeur binaire obtenue en comparant la taille de ladite file d'attente avec une valeur de seuil prédéterminée. Si cette valeur de seuil est dépassée, ladite information de congestion a une première valeur qui signifie que le canal considéré est congestionné. Quand ils reçoivent cette première valeur, les moyens de gestion de débit réduisent le débit des informations introduites, pour prévenir le débordement de ladite file d'attente. Si cette valeur de seuil n'est pas dépassée, ladite information de congestion a une seconde valeur qui signifie que le canal considéré est congestionné. Quand ils reçoivent cette seconde valeur, les moyens de gestion de débit augmentent progressivement le débit des informations introduites.

Le document **EP-A-0 712 220** décrit un procédé de gestion de trafic similaire à celui décrit par le document EP-A-0 374 928, mais consistant à transmettre deux types d'information de congestion, chaque information de congestion ayant une valeur binaire. Une information commande le blocage de la transmission sur une connexion donnée, et l'autre commande le blocage de la transmission sur toutes les connexions d'une même artère.

La présente invention a pour objet un procédé de gestion de trafic pour une connexion virtuelle d'un réseau de communication à base de paquets, ledit procédé consistant à :

- transmettre, à partir de matériels client sources, des paquets à destination de matériels client destinataires ;
- multiplexer temporellement les paquets provenant de matériels client sources différents ;
- mesurer le débit de paquets multiplexés ;
- stocker temporairement dans une file d'attente lesdits paquets multiplexés ;
- transmettre sur ladite connexion virtuelle lesdits paquets stockés ;
- déterminer une information de congestion sur ladite connexion virtuelle en direction desdits matériels client destinataires ;
- transmettre ladite information de congestion à des moyens de gestion de débit et contrôler, par ces moyens de gestion de débit, le débit des informations introduites en amont dudit multiplexage pour prévenir le débordement de ladite file d'attente ;

**caractérisé** en ce que, pour déterminer ladite information de congestion, il consiste à déterminer un nombre appelé facteur d'exploitation de canaux, en fonction du rapport entre une demande de ressources et la totalité des ressources disponible pour ladite connexion virtuelle, et en fonction en outre de la taille de ladite file d'attente et du temps de transmission de cette information auxdits moyens de gestion de débit ;
et en ce que pour contrôler, par ces moyens de gestion de débit, le débit des informations introduites en amont dudit multiplexage, il consiste à ajuster le débit en fonction dudit facteur d'exploitation de canaux .

Le procédé ainsi caractérisé est plus efficace car il réalise une régulation de type continu ou quasi-continu, en procurant une réaction fonction du risque de congestion si la congestion n'est pas atteinte, et fonction de l'importance de la congestion si celle-ci est déjà atteinte. Le caractére continu ou quasi-continu de la réaction est procuré par le fait que l'information de congestion est un nombre (appelé facteur d'exploitation de canaux ) déterminé en fonction du rapport entre une demande de ressources et la totalité des ressources disponible pour ladite connexion virtuelle. Ce rapport prend toute une gamme de valeurs. Sa valeur représente le risque de congestion si la congestion n'est pas atteinte, et l'importance de la congestion si celle-ci est déjà atteinte. Comme le procédé consiste ensuite à ajuster le débit en fonction dudit facteur d'exploitationde canaux, le débit est donc ajusté en fonction du risque de congestion si la congestion n'est pas atteinte, et de l'importance de la congestion si celle-ci est déjà atteinte. Ceci évite les inconvénients d'une réaction binaire.

Lorsqu'une connexion virtuelle devient active, par exemple lorsqu'un noeud source commence une transmission de paquets sur la connexion virtuelle, d'autres connexions virtuelles actives réduisent leur exploitation des ressources de réseau excédentaires au profit de la connexion virtuelle qui vient de devenir active, permettant ainsi une affectation rapide et équitable des ressources parmi les connexions virtuelles actives. De plus, lorsque les informations d'exploitation du réseau indiquent qu'une réduction du débit d'introduction de paquets sur le réseau est nécessaire, les connexions virtuelles présentant une exploitation plus élevée des ressources du réseau excédentaires font l'objet de réductions plus élevées du débit d'introduction de paquets par comparaison avec les connexions virtuelles présentant une exploitation moins élevée des ressources du réseau excédentaires.

Le système et le procédé mis en oeuvre seront mieux compris à la lecture de la description suivante des figures 1 à 6 qui représentent :

- la figure 1, un schéma fonctionnel d'un réseau de communication à base de paquets ;
- la figure 2, un schéma fonctionnel d'un module d'accès contenu dans un noeud source ou un noeud destinataire du réseau de communication de la figure 1 ;
- la figure 3, un schéma fonctionnel d'un module de transit contenu dans un noeud du réseau de communication de la figure 1 ;
- la figure 4, un schéma représentant un paquet ayant une partie en-tête et une partie données ;
- la figure 5, un schéma représentant la mesure d'un temps d'aller et retour d'un paquet sur le réseau de communication.

Dans le but de simplifier la description, les abréviations du tableau suivant seront employées.

| ABREVIATION | SIGNIFICATION |
|---|---|
| ATM | Mode de transfert asynchrone |
| CIR | Débit d'informations consignées |
| CMP | Période de surveillance d'encombrement |
| CPE | Matériel local client |
| CUF | Facteur d'exploitation de canaux |
| ISR | Débit d'introduction initial |
| RTD | Durée pour un aller et retour |
| SIR | Débit d'informations introduites |
| VC | Connexion virtuelle |

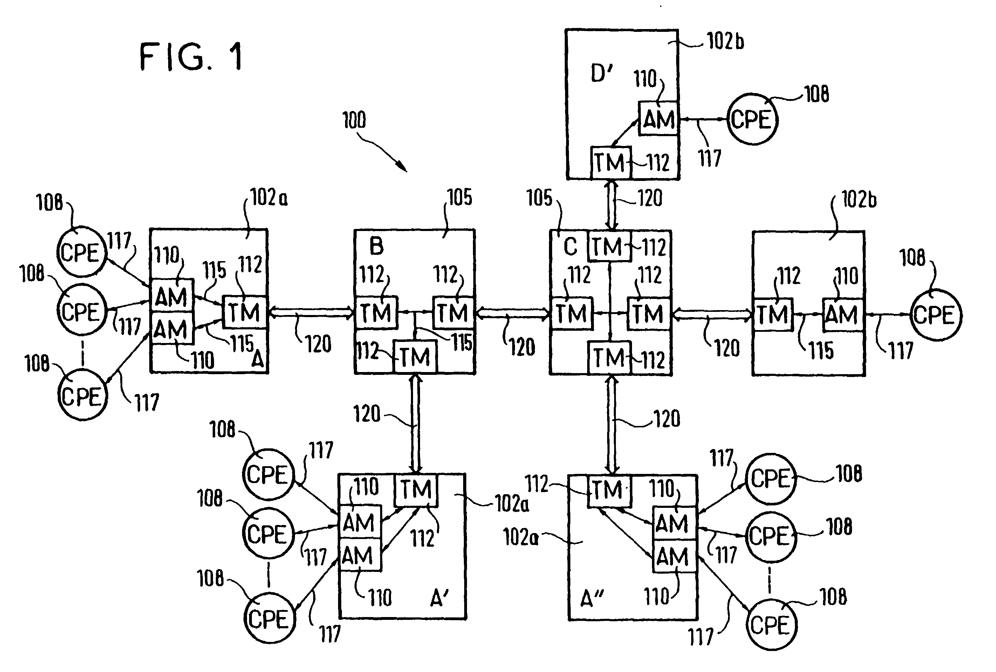

La figure 1 est un schéma fonctionnel d'un réseau de communication à base de paquets.

Un réseau de communication à base de paquets 100 comprend une pluralité de noeuds comportant des noeuds terminaux ou de commutation 102 et des noeuds intermédiaires 105. Tel que cela est bien connu dans la technique, dans un réseau de communication à base de paquets, des paquets sont transmis sur une connexion virtuelle d'un noeud source 102a à un noeud destinataire 102b, traversant généralement un ou plusieurs noeuds intermédiaires 105. Le noeud source 102a et le noeud destinataire 102b sont des noeuds de commutation 102 qui assurent l'interface avec le matériel local client 108 (CPE). Le matériel local client 108 peut comporter un réseau local, du matériel vocal, du matériel image et vidéo, ou d'autres types de matériel de transmission de données et de paquets qui fournissent des données sous forme de paquets en vue de leur transmission par l'intermédiaire du réseau de communication à base de paquets à un noeud destinataire.

Le matériel local client 108 est interconnecté à un noeud de commutation 102 par l'intermédiaire d'un module d'accès 110 (AM). Le module d'accès 110 assure l'interface avec le matériel local client 108 et exécute les fonctions suivantes : segmentation et réassemblage de paquets, admission et application de largeur de bande, contrôle de débit, redressement d'encombrement, génération d'alarmes pour les situations d'encombrement, et génération de fichiers de comptabilité et statistiques. Le noeud de commutation 102 comporte également un module de transit 112 (TM) qui exécute les fonctions suivantes : multiplexage des paquets, routage, signalisation, gestion d'encombrement, mesure et compte-rendu de l'exploitation de ressources.

Un réseau d'interconnexion 115 interconnecte tous les modules au niveau d'un noeud. Tous les composants nodaux peuvent prendre en charge une communication en duplex intégral. Par exemple, un module d'accès peut simultanément commuter des paquets d'une ligne d'accès 117 vers le réseau d'interconnexion 115, et réciproquement.

Les noeuds intermédiaires 105 comportent une pluralité de modules de transit 112 interconnectés par un réseau d'interconnexion 115. Chacun des modules de transit 112 dans un noeud intermédiaire 105 assure l'interface avec un pivot de réseau ou ligne de jonction 120 et exécute toutes les fonctions identifiées pour les modules de transit dans les noeuds de commutation 102. Les modules de transit 112 dans les noeuds intermédiaires 105 prévoient l'interconnexion des lignes de jonction de réseau 120 par l'intermédiaire des réseaux d'interconnexion 115 des noeuds 105.

Chaque connexion virtuelle établit une liaison de communication entre un des noeuds source 102a du réseau et un noeud destinataire 102b du réseau correspondant, par le biais des noeuds intermédiaires 105. Un exemple d'une connexion virtuelle est la connexion entre le noeud source A et le noeud destinataire D par le biais des noeuds intermédiaires B et C. Une autre connexion virtuelle représentée sur la figure 1 est la connexion virtuelle entre le noeud source A' et le noeud destinataire D' par le biais des noeuds intermédiaires B et C. Bien que toutes les connexions virtuelles illustrées sur la figure 1 exploitent les noeuds intermédiaires 105, une connexion virtuelle peut être établie directement entre un noeud source 102a et un noeud destinataire 102b.

Tous les composants nodaux au sein du réseau de communication 100 peuvent prendre en charge des communications en duplex intégral et, par conséquent, un noeud de commutation peut être un noeud source dans une connexion virtuelle et un noeud destinataire dans une autre connexion virtuelle. Par exemple, une connexion virtuelle peut être établie entre un noeud source A" et le noeud destinataire A' par le biais des noeuds intermédiaires C et B.

Au cours de communications sur une connexion virtuelle, des données générées par du matériel local client 108 sont fournies par l'intermédiaire des lignes d'accès 117 à un module d'accès 110 au sein d'un noeud source 102a. Les données peuvent être formatées dans le format de paquet approprié par le matériel local client 108 ou, selon une autre solution, le module d'accès 110 peut comporter un assembleur/désassembleur de paquets pour formater correctement les données fournies par le matériel local client 108 en vue de les fournir au réseau de communication 100.

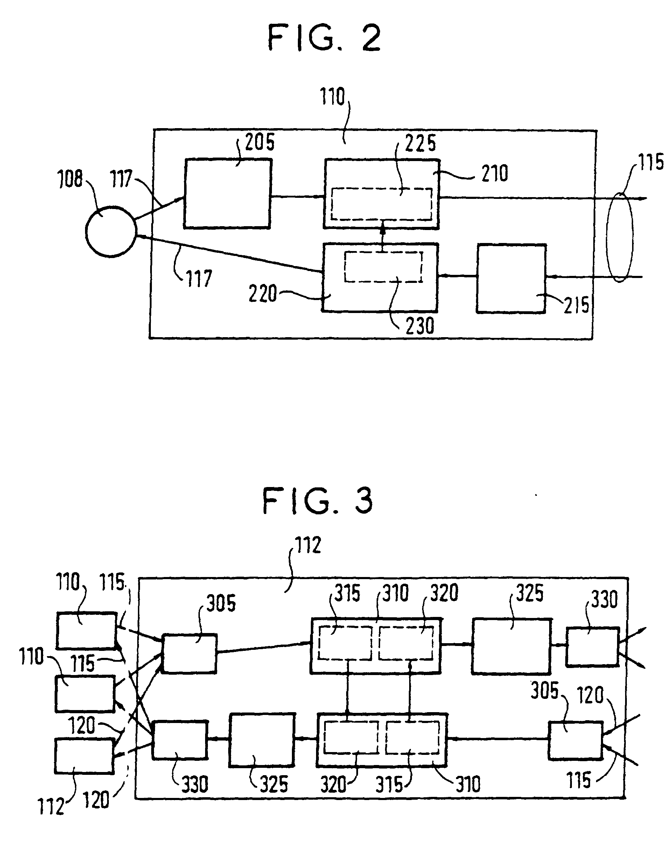

La figure 2 est un schéma fonctionnel d'un module d'accès contenu dans un noeud source ou un noeud destinataire du réseau de communication de la figure 1.

Le matériel local client 108 fournit des données aux modules d'accès 110 sur les lignes d'accès 117. Au moins une connexion virtuelle spécialisée est établie pour chaque matériel local client 108 connecté au module d'accès 110. Chacune des connexions virtuelles comporte une file d'attente 205 (constituée par une FIFO), dans laquelle les paquets fournis par le matériel local client 108 sont initialement stockés, et un serveur 210, qui contrôle la fourniture des paquets de la file d'attente au module de transit 112. Si les informations ou données fournies par le matériel local client 108 ne sont pas dans un format de paquet correct en vue d'être fournies au réseau de communication, un assembleur/désassembleur de paquets peut être prévu pour formater les données fournies par le matériel local client 108 dans le format de paquet approprié.

Les différentes files d'attente et les différents serveurs associés à chacune des connexions virtuelles peuvent être mis en oeuvre par une unité centrale de traitement (CPU) qui comporte du matériel de traitement et de mémorisation approprié pour effectuer les fonctions décrites ci-dessus et par la suite par rapport au module d'accès 110.

Les données issues du serveur 210 sont appliquées à un module de transfert. Il est également possible de prévoir un démultiplexeur à la sortie du serveur 110 si le module d'accès 110 est relié à différents modules de transit 112.

Le module d'accès 110 du noeud source 102a comporte également, pour le sens de transmission opposé, une file d'attente 215 (également réalisée sous forme de FIFO) recevant des données issues du module de transfert situé en amont. De même que précédemment, si le module d'accès 110 est connecté à plusieurs modules de transfert, un multiplexeur est placé à l'entrée de la file d'attente 215. Les données issues de cette file d'attente 215 sont appliquées à un serveur 220 comprenant des moyens 230 assurant l'extraction d'une information, appelée facteur d'exploitation de canaux (CUF), transmise dans le flot de données destinées au matériel local client 108. Cette information CUF est fournie à des moyens 225 d'ajustement de débit compris dans le serveur 210 afin que le débit des données transmises au matériel client 108 destinataire (FIG.1) soit ajusté en fonction de l'information CUF, les modules d'accès 110 ayant pour fonction de contrôler le débit d'introduction de paquets dans le réseau individuellement pour chaque connexion virtuelle, comme il sera vu par la suite.

L'information CUF est donc une information transmise dans le sens contraire des données auquel cette information s'applique. Un CUF allant vers un module 110 gérant un matériel local client 108 a un effet pour le débit des données transmises entre le module d'accès 110 de ce matériel local 108 et le matériel client 108 destinataire.

La figure 3 est un schéma fonctionnel d'un module de transit 112 contenu dans un noeud du réseau de communication 100 de la figure 1.

Comme il a été vu sur la figure 1, au sein du noeud source 102a, des noeuds intermédiaires 105, et du noeud destinataire 102b, les paquets associés à chaque connexion virtuelle sont fournis aux et depuis les réseaux d'interconnexion 115 par un module de transit 112. Chaque module de transit 112 est disposé en vue d'une communication en duplex intégral entre le réseau d'interconnexion 115 et une ligne de jonction de réseau 120.

Dans chaque sens de transmission au sein d'un module de transit 112, un multiplexeur 305 réalise un multiplexage des paquets reçus, ces paquets provenant de modules d'accès 110 (par les réseaux d'interconnexion 115) ou d'autres modules de transit 112 (par les lignes de jonction de réseau 120). Les paquets multiplexés sont appliqués à des serveurs 310 comprenant chacun des moyens 315 de calcul d'informations CUF, les informations CUF calculées étant insérées dans les paquets transmis dans l'autre sens de transmission. Ces insertions sont réalisées par des moyens d'insertion référencés 320. Les paquets sortant des serveurs sont appliqués à des files d'attente 325 suivies de démultiplexeurs 330. Les démultiplexages sont réalisés en fonction des adresses des destinataires des paquets (module d'accès 110 ou module de transit 112), ces adresses étant inscrites dans les paquets.

Lorsqu'une connexion virtuelle est établie entre un noeud source 102a et un noeud destinataire 102b, cette connexion passant éventuellement par un ou plusieurs noeuds intermédiaires 105, les paquets circulent initialement le long de la connexion virtuelle dans un sens aller, c'est-à-dire du noeud source 102a au noeud destinataire 102b. Au sein de chaque noeud, le serveur 310 associé au sens aller de la connexion virtuelle mesure le facteur d'exploitation de canaux CUF, qui est une mesure de l'exploitation des ressources critiques, par exemple la largeur de bande, la puissance de traitement, etc., lors de la transmission de paquets dans un sens aller de la connexion virtuelle. Une information CUF est par exemple un octet représentant un pourcentage d'augmentation ou de diminution de débit.

Ces informations d'exploitation sont inscrites dans des paquets circulant dans le sens retour (en direction du noeud source) de la connexion virtuelle par le serveur 310 associé au sens retour du chemin virtuel. En l'absence de trafic de retour, le noeud destinataire génère un paquet vide spécial permettant de fournir les informations d'exploitation au noeud source.

Tel que décrit de façon plus détaillée par la suite, les informations CUF contenues dans le trafic de paquet de retour d'une connexion virtuelle sont mises à jour au cours de la transmission de sorte que, lorsque le trafic de retour atteint le noeud source, les informations CUF contenues dans le trafic de retour témoignent du niveau maximal d'exploitation indiqué par l'une quelconque des ressources au sein de la connexion virtuelle. Les informations CUF prévues sont ainsi fournies au noeud source de la façon la plus appropriée et efficace possible.

Les informations CUF associées à l'exploitation de ressources subie par un paquet se déplaçant dans le sens aller ne se déplacent pas avec ce paquet sur la totalité du chemin allant jusqu'au noeud destinataire. Au lieu de cela, les informations CUF en cours associées à un noeud particulier sont directement inscrites dans des paquets circulant dans le sens retour vers le noeud source. Les spécialistes de la technique comprendront que, dans une connexion virtuelle, le premier noeud (noeud d'accès) rencontré par les paquets se déplaçant dans le sens aller est généralement le noeud critique et potentiellement le plus limitatif (par rapport à l'exploitation de ressources) rencontré par les paquets dans la connexion virtuelle. Les informations CUF liées au premier noeud dans le sens aller sont donc les informations les plus pertinentes fournies au noeud source au cours de la transmission de paquets par le noeud source sur la connexion virtuelle.

Si les informations CUF indiquent que les ressources sur la connexion virtuelle sont sous-exploitées, le noeud source ordonne au serveur de connexion virtuelle 210 compris dans le module d'accès correspondant d'augmenter son débit d'introduction de paquets dans le réseau. Cependant, si les informations CUF indiquent que les ressources sur la connexion virtuelle sont surexploitées, le noeud source ordonne au serveur de connexion virtuelle 210 de réduire son débit d'introduction de paquets dans le réseau.

La période de temps comprise entre deux ajustements de débit consécutifs est sélectionnée de façon à permettre au premier ajustement de prendre effet dans tout le réseau avant que le deuxième ajustement ne survienne. Cette durée est sélectionnée de façon à être égale à au moins un temps d'aller et retour (RTD) sur le réseau. Un temps d'aller et retour sur le réseau témoigne du temps nécessaire pour qu'un paquet transmis à partir du noeud source atteigne le noeud destinataire et retourne au noeud source, par l'intermédiaire de la connexion virtuelle. A titre d'exemple, dans un réseau peu chargé, un RTD classique est d'environ 80 à 100 millisecondes, et dans un réseau chargé, un RTD classique est d'environ 200 à 250 millisecondes. Ces durées sont notamment fonction du nombre de noeuds, de connexions de réseau, de la longueur du réseau, etc.

Tel que décrit ci-dessus, chaque connexion virtuelle possède une file d'attente 205 et un serveur 210 séparés, le débit d'introduction de paquets par le serveur 210 étant mis à jour en fonction du retour de l'information du réseau. Le débit d'introduction de paquets dans le réseau par un serveur 210 pour une connexion virtuelle déterminée est appelé débit d'informations introduites (SIR). Le débit SIR est mis à jour le plus souvent possible, mais pas dans un laps de temps inférieur au temps d'aller et retour RTD sur le réseau, sauf dans des cas d'encombrement majeur.

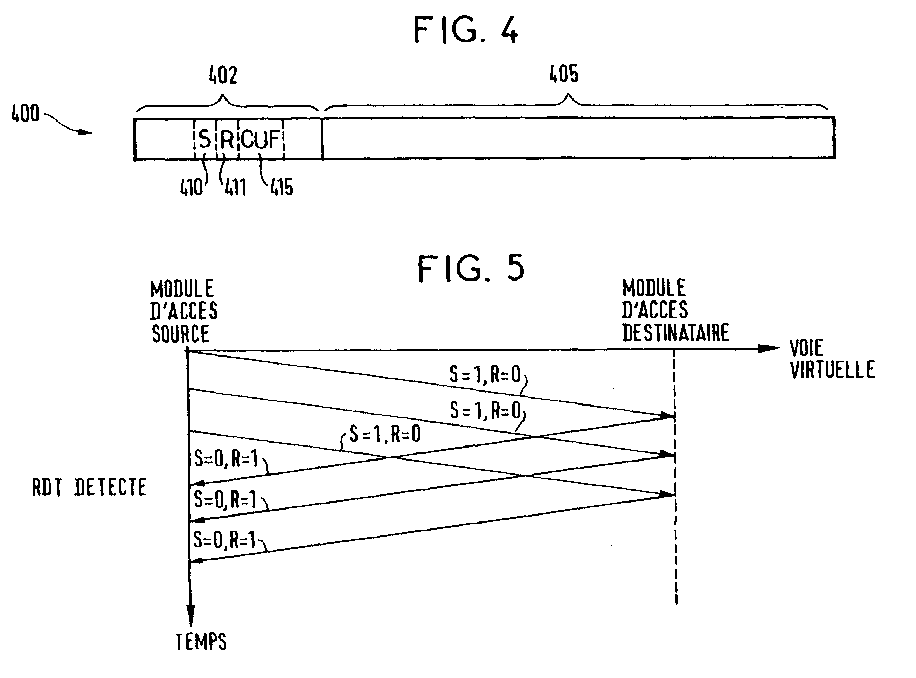

En référence aux figures 2 et 4, chaque paquet 400 présente une partie en-tête 402 et une partie données 405. La partie en-tête 402 contient différentes informations de réseau requises telles que le routage, la signalisation, la vérification de parité ou d'erreur, et plusieurs autres informations connues parmi les spécialistes de la technique. La partie données 405 contient les données (informations) à transmettre du noeud source 102a au noeud destinataire 102b.

Pour mesurer le RTD le long de chaque connexion virtuelle, chaque partie en-tête de paquet 402 contient une balise d'envoi (S) 410 et une balise de réception (R) 411. Un groupe de paquets introduits dans le réseau peut se présenter sous forme d'une rafale de paquets, ou le groupe peut être un long flux de paquets. Lorsque le module d'accès 110 du noeud source met à jour le SIR, il modifie la valeur de la balise d'envoi 410, et place la nouvelle valeur de la balise d'envoi 410 dans l'en-tête 402 de tous les paquets 400 au sein du groupe transmis dans le sens aller.

De plus, le serveur 210 enregistre l'heure à laquelle le premier paquet du groupe de paquets a été transmis sur la connexion virtuelle. L'heure peut être enregistrée dans un registre mémoire du serveur 210, par exemple. Le serveur 210 dans le module d'accès 110 du noeud destinataire lit la balise d'envoi 410 de tous les paquets 400 reçus pour une connexion virtuelle déterminée et la place dans la balise de réception de tous les paquets transmis dans le sens retour. Le module d'accès 110 du noeud source attend jusqu'à ce qu' il détecte que la balise de réception 411 des paquets reçus du réseau pour la connexion virtuelle déterminée est égale à la balise d'envoi 410 des paquets correspondant à l'heure enregistrée dans le registre mémoire. A cet instant, le module a la certitude qu'au moins une période d'aller et retour s'est écoulée depuis la dernière mise à jour du SIR. Le RTD est mesuré en tant que différence de temps entre le début de la transmission du groupe, c'est-à-dire l'heure enregistrée dans le registre mémoire, et le moment de la réception du premier paquet de retour dans le groupe.

La mesure du temps d'aller et retour sera mieux comprise à l'aide d'un exemple. En référence aux figures 4 et 5, supposons qu'un groupe de paquets 400 fourni par le module d'accès 110 du noeud source (figure 1) contient une balise d'envoi 410 égale à 1 (S = 1) et une balise de réception 411 égale à 0 (R = 0). Chaque paquet 400 au sein du groupe possède alors un bit S égal à 1 et un bit R égal à 0. Lorsque le premier paquet 400 au sein du groupe atteint le module d'accès 110 du noeud destinataire (figure 1), la valeur de la balise d'envoi 410 dans chaque paquet est lue par le serveur 210 (figure 2) et placée dans la balise de réception 411 de sorte que la balise de réception de chaque paquet est fixée égale à 1 (R = 1). Une fois que le module d'accès 110 du noeud source (figure 1) détecte que la balise de réception 411 des paquets reçus est égale à la balise d'envoi 410 stockée au sein du module, un temps d'aller et retour est détecté et un temps d'aller et retour est déterminé comme la différence de temps entre le moment de la transmission et le moment où le paquet de retour est reçu par le module.

Le RTD mesuré traduit la charge (ou temps) de réseau en cours le long de la connexion virtuelle déterminée. Par conséquent, les mises à jour du SIR ont lieu plus fréquemment dans des conditions de charge de réseau peu élevée. Une fréquence élevée de mises à jour du SIR accélère la fréquence des augmentations de capacité de traitement de bout en bout pour toutes les connexions virtuelles actives. Dans des conditions de charge de réseau élevée, les mises à jour du SIR ont lieu moins fréquemment, permettant ainsi aux ajustements de débit de se propager et prendre entièrement effet dans la totalité du réseau. Cette caractéristique est utile pour les connexions virtuelles qui transmettent du trafic en rafale. Le trafic en rafale crée une charge de réseau élevée et de courte durée lorsqu'il est placé sur la connexion virtuelle, et le trafic en rafale est susceptible d'être transféré en différé peu de temps après. Des mises à jour moins fréquentes du SIR dans ce cas permettent au réseau de transférer immédiatement une grande partie de la rafale de trafic par l'intermédiaire de la connexion virtuelle avant que le SIR de la connexion virtuelle ne soit brusquement augmenté.

Comme indiqué précédemment, le module d'accès 110 du noeud source d'une connexion virtuelle ajuste le SIR en fonction du CUF reçu du réseau. Le SIR est toujours supérieur ou égal à un débit d'informations consignées (CIR), et inférieur ou égal à un débit d'informations excédentaires (EIR).

Le CIR peut être déterminé sur la base de l'abonnement de l'utilisateur. Par exemple, un utilisateur peut s'abonner à un CIR de 64 Kbits/s, ou à des multiples de celui-ci allant par exemple jusqu'à 10 Mbits/s.

Le EIR peut dépendre du type de ligne d'accès employé. Par exemple, dans le cas d'une ligne d'accès T1, EIR vaut 1.536 Mbits/s.

Le CUF est le facteur clé du système de gestion de trafic. C'est le rapport entre la demande de ressources de réseau et la totalité des ressources disponibles. Le CUF est mesuré sur une période de temps, désignée par l'expression période de surveillance d'encombrement (CMP). La CMP est suffisamment longue pour permettre une mesure statistique précise du CUF, tout en étant suffisamment courte pour permettre plusieurs mesures de CUF par RTD. Les ressources de réseau surveillées sont la puissance de processeur et la largeur de bande de jonction. La valeur de CUF signalée par chaque noeud correspond à l'exploitation de processeur et à l'exploitation de jonction maximales.

Au cours d'une CMP, chaque module de transit accumule le nombre total de paquets proposés (en entrée et en sortie) pour un processeur déterminé et le nombre total d'octets proposés (en sortie uniquement) pour une jonction déterminée. A la fin d'une CMP, l'exploitation de processeur est calculée en tant que le rapport entre le nombre total de paquets proposés et la capacité de commutation maximale du processeur. L'exploitation de jonction est calculée en tant que le rapport entre le nombre total d'octets proposés et la capacité de largeur de bande maximale de la jonction. Puisque le CUF est un rapport entre la charge proposée et la capacité disponible, le CUF peut être supérieur à 1.

En référence à la figure 4, le CUF est codé et placé dans un champ de CUF 415 de l'en-tête de paquet 402. Le champ de CUF 415 peut, par exemple, représenter des valeurs comprises entre 1% et 1000%.

En référence une nouvelle fois à la figure 1, il est prévu une approche unique pour communiquer des valeurs de CUF du réseau 100 au noeud source 102a.

Supposons qu'une connexion virtuelle est établie entre le noeud source A et le noeud destinataire D par le biais des noeuds intermédiaires B et C. Au fur et à mesure que les paquets circulent des noeuds A à D, tous les modules de transit 112 le long de la connexion virtuelle mesurent l'exploitation de processeur et l'exploitation de jonction. A la fin de chaque CMP, chaque module de transit insère son CUF mesuré dans tous les paquets circulant des noeuds D à A uniquement si le CUF mesuré est supérieur au CUF stocké dans le paquet. Par conséquent, les paquets qui atteignent le noeud A contiennent le CUF maximal rencontré le long du chemin dans le sens aller de la connexion virtuelle. Le module d'accès 110 du noeud source exploite ces informations pour ajuster le paramètre SIR de la connexion virtuelle en conséquence.

Tel que décrit ci-dessus, les informations d'exploitation sont transmises directement au noeud source, permettant ainsi aux informations d'exploitation d'atteindre le noeud source rapidement, le temps maximum étant égal à la moitié du temps d'aller et retour sur le réseau (RTD/2).

En plus du contrôle de débit de bout en bout décrit ci-dessus, il est prévu une mise en file d'attente des paquets pendant les périodes de surcharge du réseau. La mise en file d'attente dans les modules d'accès 110 est réalisée pour chaque connexion virtuelle individuelle. Le serveur 210 pour chaque file d'attente 205 de connexion virtuelle est exploité selon un débit égal au SIR correspondant. La mise en file d'attente dans les modules de transit est réalisée pour chaque jonction individuelle. Par conséquent, toutes les connexions virtuelles établies sur une jonction déterminée sont mises en attente dans une seule file d'attente. Pour cette file d'attente, le serveur est exploité selon le débit de jonction.

Afin de contenir le temps dans le réseau de bout en bout et détecter les encombrements naissants, l'occupation de chaque file d'attente est constamment surveillée et comparée à un ensemble de seuils de file d'attente ou de niveaux d'encombrement. Par exemple, un module de transit peut surveiller 9 niveaux d'encombrement, le niveau 0 correspondant à une "absence d'encombrement" et le niveau 8 correspondant à un "encombrement majeur". Les niveaux d'encombrement intermédiaires sont communiqués aux modules d'accès 110 du noeud source par l'intermédiaire du mécanisme de CUF décrit précédemment. Ceci a pour effet que les modules d'accès réduisent leur SIR de façon appropriée pour éviter l'encombrement. Si des niveaux d'encombrement plus élevés surviennent, le module de transit affecté est susceptible d'utiliser une option CUF spéciale pour obliger toutes les connexions virtuelles impliquées à réduire leur paramètre SIR au paramètre CIR.

L'information CUF transmise au module d'accès tient en plus compte de la taille de la file d'attente et du temps de transmission de cette information aux moyens de gestion de débit, de manière à prévenir le débordement de la mémoire tampon, lorsque ledit débit de paquets multiplexés devient inférieur à une valeur de seuil donnée. Ceci est prévu pour remédier au problème suivant: si le débit transmis sur les connexions virtuelles augmente brutalement, le nombre de paquets multiplexés (305, FIG.2) croît très rapidement également. Ceci peut avoir pour conséquence un débordement des files d'attente 325 situées en aval des multiplexeurs 305, ce qui se traduit par une perte de paquets.

Ainsi, le procédé de gestion de trafic selon l'invention appliqué à une connexion virtuelle d'un réseau de communication à base de paquets où les paquets provenant de différents matériels local clients sont multiplexés avant d'être temporairement stockés dans une file d'attente, garantit une non-perte des paquets transmis sur la connexion virtuelle par débordement de cette file d'attente.

L'invention propose d'éviter le débordement des files d'attente 325 en veillant à ce que les facteurs d'exploitation de canaux (CUF) tiennent notamment compte de la taille de ces files d'attente, lorsque le débit de paquets multiplexés devient inférieur à une valeur de seuil.

Le facteur d'exploitation de canaux (CUF) est avantageusement une information garantissant la vérification de la relation suivante :

$$\sum_i SIR_{i,t} \leq k_{TM} * TR \qquad (1)$$

avec $SIR_{i,t}$ le débit d'introduction de paquets dans le réseau pour une connexion virtuelle i au temps t, TR une constante correspondant au débit de transmission de paquets sur la connexion virtuelle en direction des matériels client destinataires, et $k_{TM}$ égal à :

$$k_{TM} = 1 + \frac{FIFO_{over}}{(RTD+CMP) * \lambda * TR} \qquad (2)$$

avec $FIFO_{over}$ le nombre de paquets pouvant être mémorisés dans la file d'attente, RTD le temps d'aller et retour d'un paquet sur le réseau de communication, CMP le temps de mesure du débit instantané sur la connexion virtuelle et $\lambda$ une constante supérieure à 1 tenant compte des temps de réaction des composantes du réseau de communication.

$k_{TM}$ correspond à un facteur de surcharge lié à la taille de la file d'attente 325.

La durée RTD+CMP correspond au temps s'écoulant entre une mesure du débit sur la jonction 120 et le moment où ce débit est réduit.

En pratique, le procédé de l'invention peut être mis en oeuvre de la manière suivante :

A l'entrée de la file d'attente 325, une charge MTFU est mesurée par les moyens de calcul 315. Cette mesure consiste à compter le nombre de paquets mis dans la file d'attente :

$$MTFU = \frac{\text{nombre de paquets * taille d'un paquet}}{CMP * TR}$$

Chaque connexion virtuelle VC contribue à charger la file d'attente avec une charge en débit $NLR_i$ égale à :

$$NLR_i = \frac{\text{nombre de paquets * taille d'un paquet}}{CMP}$$

On a donc la relation :

$$\sum_i NLR_i = MTFU \ast TR$$

La charge MTFU doit être amenée à une valeur désirée TTL correspondant à un pourcentage (par exemple 80%) de TR.

Si la charge MTFU est inférieure à TTL (par exemple MTFU = 0,6*TR), l'information CUF retournée est telle qu'une augmentation de débit est autorisée dans la limite de

$$(0,8/0,6) \ast \sum_i SIR_{i,t}.$$

Le serveur 210 (FIG.2) va alors pouvoir augmenter son débit de transmission.

Si la charge MTFU est supérieure à TTL (par exemple MTFU = 1,1*TR), l'information CUF retournée est qu'une diminution de débit est nécessaire dans la limite de

$$(0,8/1,1) \ast \sum_i SIR_{i,t}.$$

Le serveur 210 (FIG.2) va alors diminuer son débit de transmission.

Si la charge MTFU est très inférieure à TTL (par exemple MTFU = 0,2*TR) et qu'une brusque augmentation de débit aurait pour résultat le débordement de la file d'attente, on a :

$$\sum_i SIR_{i,t} \ast (0,8/0,2) > k_{TM} \ast TR$$

Dans ce cas, la valeur de l'information CUF retournée limite l'autorisation d'augmentation de débit jusqu'à une valeur $k_{TM} \ast TR$. L'observation de ce débit maximum permet d'assurer que la file d'attente ne débordera pas. On aura alors :

$$\sum_i SIR_{i,t+CMP} = k_{TM} \ast TR.$$

On notera (relation 2) que le débit maximum alloué est d'autant plus important que la taille de la file d'attente est importante et que CMP, RTD et TR sont petits.

Le facteur $\lambda$ de la relation 1 permet de prendre en compte le délai de convergence des fonction à l'émission et le temps de réaction du système. Des simulations ont montré qu'une valeur de $\lambda$ égale à 2 convient.

Comme indiqué précédemment, le facteur d'exploitation de canaux (CUF) est habituellement inséré dans des paquets transmis en direction du matériel client destinataire 108 pour être intercepté au niveau du serveur 220 compris dans le module d'accès 110 de ce client destinataire 108. En l'absence de paquets destinés à ce client destinataire 108, le facteur d'exploitation de canaux est transmis dans un paquet vide spécial en direction du matériel client destinataire 108.

Le procédé de l'invention s'applique notamment aux réseaux à relais de trame et aux réseaux ATM.

## Revendications

1. Procédé de gestion de trafic pour une connexion virtuelle d'un réseau de communication à base de paquets, ledit procédé consistant à :

   - transmettre, à partir de matériels client sources (108), des paquets à destination de matériels client destinataires (108) ;

- multiplexer temporellement les paquets provenant de matériels client sources (108) différents ;
- mesurer le débit de paquets multiplexés ;
- stocker temporairement dans une file d'attente (325) lesdits paquets multiplexés ;
- transmettre sur ladite connexion virtuelle (210) lesdits paquets stockés ;
- déterminer une information de congestion sur ladite connexion virtuelle (210) en direction desdits matériels client destinataires (108) ;
- transmettre ladite information de congestion à des moyens de gestion de débit (210) et contrôler, par ces moyens de gestion de débit, le débit des informations introduites en amont dudit multiplexage pour prévenir le débordement de ladite file d'attente

**caractérisé en ce que**, pour déterminer ladite information de congestion, il consiste à déterminer un nombre appelé facteur d'exploitation de canaux (CUF), en fonction du rapport entre une demande de ressources et la totalité des ressources disponible pour ladite connexion virtuelle, et en fonction en outre de la taille de ladite file d'attente (325) et du temps de transmission de cette information auxdits moyens de gestion de débit (210) ; et **en ce que** pour contrôler, par ces moyens de gestion de débit, le débit des informations introduites en amont dudit multiplexage, il consiste à ajuster le débit en fonction dudit facteur d'exploitation de canaux (CUF).

2. Procédé selon la revendication 1, **caractérisé en ce que** ledit facteur d'exploitation de canaux (CUF) est une information garantissant la vérification de la relation suivante :

$$\sum_i SIR_{i,t} \leq k_{TM} * TR$$

avec $SIR_{i,t}$ le débit d'introduction de paquets dans le réseau pour une connexion virtuelle i au temps t, TR ledit débit de transmission de paquets sur ladite connexion virtuelle en direction desdits matériels client destinataires (108), et $k_{TM}$ égal à :

$$k_{TM} = 1 + \frac{FIFO_{over}}{(RTD+CMP) * \lambda * TR}$$

avec $FIFO_{over}$ le nombre de paquets pouvant être mémorisés dans ladite file d'attente (325), RTD le temps d'aller et retour d'un paquet sur ledit réseau de communication, CMP le temps de mesure du débit instantané sur ladite connexion virtuelle (120) et $\lambda$ une constante supérieure à 1 tenant compte des temps de réaction des composantes dudit réseau de communication.

3. Procédé selon la revendication 2, **caractérisé en ce que** $\lambda$ est égal à 2.

4. Procédé selon l'une des revendications 1 à 3, **caractérisé en ce que** ledit facteur d'exploitation de canaux (CUF) est inséré dans des paquets transmis en direction desdits matériels client destinataires (108).

5. Procédé selon l'une des revendications 1 à 3, **caractérisé en ce que** ledit facteur d'exploitation de canaux (CUF) est transmis dans un paquet vide spécial en direction desdits matériels client destinataires (108) en l'absence de trafic de retour.


**Claims**

1. A method of managing traffic for a virtual connection of a packet-based communications network, said method consisting in:

    transmitting packets from source customer-premises equipment (108) to destination customer-premises equipment (108);
    time-division multiplexing the packets coming from the various source customer-premises equipment (108);
    measuring the data-rate of the multiplexed packets;
    temporarily storing said multiplexed packets in a queue (325);

transmitting said stored packets over said virtual connection (210);

- determining information about congestion on said virtual connection (210) going to said customer-premises equipment (108);
- transmitting said congestion information to data rate management means (210) and controlling, by the data rate management means, the data rate of the information introduced upstream of said multiplexing so as to prevent said queue from overflowing;

the method being **characterized in that**, in order to determine said congestion information, it consists in determining a number, referred to as the channel utilization factor (CUF), as a function of the difference between a demand for resources and the total available resources for said virtual connection, and as a function also of the size of said queue (325) and the transmission time of this information to said data rate management means (210); and **in that**, in order to manage, by such data rate management means, the data rate of the information introduced upstream of said multiplexing system, it consists in adjusting the data rate as a function of said channel utilization factor (CUF).

2. A method according to claim 1, **characterized in that** said channel utilization factor (CUF) is a piece of information guaranteeing that the following relationship is satisfied:

$$\sum_i SIR_{i,t} \leq k_{TM} * TR$$

where $SIR_{i,t}$ is the rate at which the packets are sent into the network for a virtual connection $\underline{i}$ at time $\underline{t}$, TR is the rate at which packets are transmitted over the virtual connection towards destination items of customer-premises equipment (108), and $k_{TM}$ is equal to:

$$k_{TM} = 1 + \frac{FIFO_{over}}{(RTD+CMP)*\lambda*TR}$$

where $FIFO_{over}$ is the number of packets that can be stored in said queue (325), RTD is the time taken by a packet to make a round trip over said communications network, CMP is the time of measurement of the instantaneous data-rate over the virtual connection (120), and $\lambda$ is a constant greater than 1 taking into account the response times of the components of said communications network.

3. A method according to claim 2, **characterized in that** $\lambda$ is equal to 2.

4. A method according to any one of claims 1 to 3, **characterized in that** said channel utilization factor (CUF) is inserted into the packets transmitted towards said destination customer-premises equipment (108).

5. A method according to any one of claims 1 to 3, **characterized in that** said channel utilization factor (CUF) is transmitted in a special empty packet towards said destination customer-premises equipment (108) in the absence of return traffic.

**Patentansprüche**

1. Verfahren zur Verkehrssteuerung für eine virtuelle Verbindung eines paketvermittelten Kommunikationsnetzes, wobei dieses Verfahren darin besteht:

- Pakete ausgehend von Quell-Teilnehmerendgeräten (108) zu Ziel-Teilnehmerendgeräten (108) zu übertragen;
- die von verschiedenen Quell-Teilnehmerendgeräten (108) stammenden Pakete einem Zeitmultiplexverfahren zu unterziehen;
- die Datenrate der gemultiplexten Pakete zu messen;
- diese gemultiplexten Pakete vorübergehend in einer Warteschleife (325) zu speichern;
- diese gespeicherten Pakete über die genannte virtuelle Verbindung (210) zu übertragen;
- eine Überlastinformation auf dieser virtuellen Verbindung (210) in Richtung der Ziel-Teilnehmerendgeräte (108) zu bestimmen;

- diese Überlastinformation an Datenrate-Regelungsvorrichtungen (210) zu übertragen und durch diese Datenrate-Regelungsvorrichtungen die Datenrate der Informationen zu regeln, die vor dem Multiplexen eingespeist wurden, um ein Überlaufen der Warteschlange zu verhindern;

**dadurch gekennzeichnet, dass** es zur Bestimmung der genannten Überlastinformation darin besteht, eine als Kanalauslastungsfaktor (CUF) bezeichnete Zahl zu bestimmen, und zwar in Abhängigkeit vom Verhältnis zwischen einem Ressourcenbedarf und der Gesamtheit der Ressourcen, die für die virtuelle Verbindung verfügbar sind, sowie außerdem in Abhängigkeit von der Größe der Warteschlange (325) und der Übertragungsdauer dieser Information an die Datenrate-Regelungsvorrichtungen (210);

und **dadurch**, dass es zur Regelung der Datenrate- durch diese Datenrate-Regelungsvorrichtungen für die vor dem Multiplexen eingespeisten Informationen darin besteht, die Datenrate in Abhängigkeit von diesem Kanalauslastungsfaktor (CUF) anzupassen.

2. Verfahren nach Anspruch 1, **dadurch gekennzeichnet, dass** der Kanalauslastungsfaktor (CUF) eine Information ist, welche die Verifizierung der folgenden Beziehung garantiert:

$$\sum_i SIR_{i,t} \leq k_{TM} * TR$$

mit $SIR_{i,t}$ gleich der Paketeinspeisungsrate in das Netz für eine virtuelle Verbindung i zum Zeitpunkt t, TR gleich der Paketübertragungsrate auf der virtuellen Verbindung in Richtung der Ziel-Teilnehmereinrichtungen (108), und $k_{TM}$ gleich:

$$k_{TM} = 1 + \frac{FIFO_{over}}{(RTD + CPM) * \lambda * TR}$$

mit $FIFO_{over}$ gleich der Anzahl der Pakete, die in der Warteschlange (325) gespeichert werden können, RTD gleich der Umlaufzeit eines Pakets in dem Kommunikationsnetz, CMP gleich der Messungszeit der Momentan-Datenrate auf der virtuellen Verbindung (120) und $\lambda$ gleich einer Konstante größer 1, welche die Reaktionszeiten der Komponenten des Kommunikationsnetzes berücksichtigt.

3. Verfahren nach Anspruch 2, **dadurch gekennzeichnet, dass** $\lambda$ gleich 2 ist.

4. Verfahren nach einem der Ansprüche 1 bis 3, **dadurch gekennzeichnet, dass** der Kanalauslastungsfaktor (CUF) in Pakete eingefügt wird, die in Richtung der Ziel-Teilnehmerendgeräte (108) übertragen werden.

5. Verfahren nach einem der Ansprüche 1 bis 3, **dadurch gekennzeichnet, dass** der Kanalauslastungsfaktor (CUF) in einem speziellen leeren Paket in Richtung der Ziel-Teilnehmerendgeräte (108) übertragen wird, wenn kein Verkehr in RückRichtung vorhanden ist.

# FIG. 1

EP 0 835 010 B1

# FIG. 2

# FIG. 3

EP 0 835 010 B1

# FIG. 4

400

402

405

S R CUF

410 411 415

# FIG. 5

MODULE
D'ACCES
SOURCE

MODULE
D'ACCES
DESTINATAIRE

VOIE
VIRTUELLE

S=1, R=0

S=1, R=0

S=1, R=0

S=0, R=1

RDT DETECTE

S=0, R=1

S=0, R=1

TEMPS